(19) Europäisches Patentamt / European Patent Office / Office européen des brevets

(11) **EP 1 972 831 A2**

(12) **EUROPEAN PATENT APPLICATION**

(43) Date of publication:
24.09.2008 Bulletin 2008/39

(51) Int Cl.:
*F16H 9/16* (2006.01)   *F16H 9/18* (2006.01)

(21) Application number: 08004723.6

(22) Date of filing: 13.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 23.03.2007 JP 2007077456

(71) Applicant: JATCO Ltd
Fuji-shi,
Shizuoka 417-8585 (JP)

(72) Inventors:
• Ito, Yasuo
  Fuji-shi
  Shizuoka 417-8585 (JP)
• Katou, Yoshiaki
  Fuji-shi
  Shizuoka 417-8585 (JP)

• Yoshida, Makoto
  Fuji-shi
  Shizuoka 417-8585 (JP)
• Yamazaki, Masanori
  Fuji-shi
  Shizuoka 417-8585 (JP)
• Matsubara, Masami
  Fuji-shi
  Shizuoka 417-8585 (JP)
• Segawa, Toshiaki
  Fuji-shi
  Shizuoka 417-8585 (JP)

(74) Representative: Görz, Ingo
Hoefer & Partner
Patentanwälte
Pilgersheimer Strasse 20
81543 München (DE)

(54) **Continuously variable transmission and manufacturing method**

(57)   Sheave surfaces (11a to 14a) of a primary pulley (2) and a secondary pulley (3) contacting a V-belt (4) which is looped around the pulleys (2,3) are provided with an initial wear height (Rpk) at which a reaction film (52a,52b) between the V-belt (4) and the sheave surfaces (11a to 14a) does not become worn and a sufficient oil keeping depth (Rvk) to promote generation of the reaction film (52a,52b) such that metallic contact does not occur between the sheave surfaces (11a to 14a) and the V-belt (4).

FIG.1

EP 1 972 831 A2

(Cont. next page)

FIG.3

**Description**

FIELD OF THE INVENTION

This invention relates to a continuously variable transmission and a method of manufacturing a continuously variable transmission, and more particularly to a sheave surface of respective pulleys.

BACKGROUND OF THE INVENTION

In a belt type continuously variable transmission, a belt looped around each of a primary pulley and a secondary pulley is thrust and sandwiched by the pulleys using oil pressure in an oil chamber provided in each pulley. Further, by supplying and discharging oil pressure to and from the oil chamber, a contact radius between each pulley and the belt is varied, thereby modifying a pulley ratio (speed ratio) such that ratio changes are performed continuously.

To prevent slippage from occurring in the belt, the pulleys must be thrust by a comparatively high oil pressure, but when the oil pressure in the oil chamber is increased, a line pressure that serves as a source pressure of the oil pressure supplied to each pulley increases, and when the line pressure increases, the fuel economy deteriorates.

JP2005-321090A discloses a conventional method in which a contact area between a sheave surface of a pulley and an element of a belt is increased by reducing the surface roughness of the sheave surface. As a result, a frictional coefficient between the sheave surface and the belt is improved, leading to an increase in frictional force between the sheave surface and the belt and a reduction in the oil pressure for thrusting the pulley. Thus, the fuel economy is improved.

SUMMARY OF THE INVENTION

However, in the invention described above, variation may occur in the frictional coefficient between the sheave surface and the element even when the surface roughness of the sheave surface is reduced, and as a result, it may be impossible to obtain the desired frictional force. Accordingly, it may be impossible to reduce the oil pressure for thrusting the pulley, and an improvement in fuel economy may not be achieved.

This invention has been designed to solve this problem, and a frictional coefficient between a sheave surface and an element is improved, and frictional force is increased, when surface roughness is reduced. Therefore, an object is to achieve an improvement in fuel economy by reducing the oil pressure for thrusting a pulley.

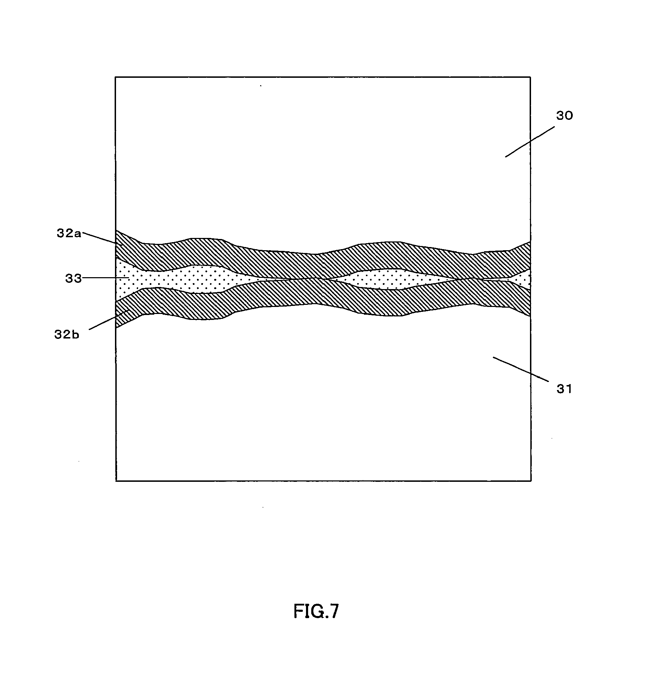

In a contact portion between an element 30 and a sheave surface 31, contact is basically achieved via an oil film, and the oil film is constituted by reaction films 32a 32b formed when an additive component of a lubricating oil is adsorbed onto the surface of the element and the sheave surface, and a lubricating film 33 functioning as the lubricating oil. FIG. 7 is a pattern diagram showing a contact surface between an element and a sheave surface. An item relating to the reaction film is provided in a Bowden-Tabor which is boundary friction formula shown in Equation (1), and hence it can be seen that the reaction film is an important element affecting the frictional coefficient.

$$\text{Frictional coefficient } \mu = \text{shearing strength } \tau \text{ of reaction film}/\text{Heff}$$

$$\text{Eq. (1)}$$

(when the entire contact portion is covered by the reaction film).
Here, Heff is expressed as shown in the following Equation (2).

$$\text{Heff} = \text{H2} + (\text{H1-H2}) \exp(-ct/\beta) \qquad \text{Eq. (2)}$$

H2: hardness of reaction film
H1: hardness of base material
t: thickness of reaction film
β: radius of curvature of projection
c: constant

Torque transmission is performed via the reaction film, which generates shearing strength, and therefore a high frictional coefficient can be obtained by forming the reaction film widely over the contact portion. However, the reaction film is not as hard as metal, and therefore, if excessive shearing strength is generated, the reaction film becomes worn, leading to a reduction in the frictional coefficient. Therefore, wear on the reaction film must be suppressed to obtain a high frictional coefficient.

This present invention provides a continuously variable transmission which comprises an input side primary pulley having a variable groove width formed by an opposing sheave, an output side secondary pulley having a variable groove width formed by an opposing sheaves, and a belt looped around the primary pulley and the secondary pulley, in which a contact radius with sheave surfaces of the sheaves vary in accordance with the groove width, wherein the at least one of the sheave surfaces is provided with an initial wear height at which a reaction film between the sheave surface and the belt does not become worn and a sufficient oil keeping depth to promote generation of the reaction film such that metallic contact does not occur between the sheave surface and the belt.

This present invention provides also a manufacturing method for a continuously variable transmission which has an input side primary pulley having a variable groove width formed by an opposing sheaves, an output side secondary pulley having a variable groove width formed by an opposing sheaves, and a belt looped around the primary pulley and the secondary pulley, in which a contact radius with sheave surfaces of the sheaves vary in accordance with the groove width. In the method, at least one of the sheave surfaces is finished on the basis of an initial wear height and an oil keeping depth.

According to this invention, the sheave surface of the pulley of the continuously variable transmission is provided with an initial wear height at which a reaction film between the sheave surface and the belt does not become worn and a sufficient oil keeping depth to promote generation of the reaction film such that metallic contact does not occur between the sheave surface and the belt, and therefore, when the surface roughness is reduced, the frictional coefficient improves, leading to an increase in the frictional force between the sheave surface and the belt. Thus, the oil pressure required to thrust the pulley can be reduced, enabling an improvement in fuel economy.

BRIEF DESCRIPTION OF THE DRAWINGS

FIG. 1 is a schematic constitutional diagram of a continuously variable transmission according to an embodiment of this invention.

FIG. 2 is a schematic constitutional diagram of a V-belt according to an embodiment of this invention.

FIG. 3 is a view showing a load ratio curve illustrating an initial wear height and an oil keeping depth in an example of this invention.

FIG. 4 is a view showing a relationship between surface roughness and a frictional coefficient in an example of this invention.

FIG. 5 is a view showing a relationship between the initial wear height and element wear in an example of this invention.

FIG. 6 is a view showing a relationship between the oil keeping depth and a surface roughness deviation in an example of this invention.

FIG. 7 is an enlarged sectional view showing the vicinity of a contact surface between an element side face and a pulley according to an embodiment of this invention.

FIG. 8 is in an enlarged sectional view showing the vicinity of a contact surface between an element side face and a pulley in an example of this invention, and a view illustrating the effect of the oil keeping depth.

FIG. 9 is in an enlarged sectional view showing the vicinity of the contact surface between the element side face and the pulley in an example of this invention, and a view illustrating the effect of the oil keeping depth.

DETAILED DESCRIPTION OF THE PREFERRED EMBODIMENT

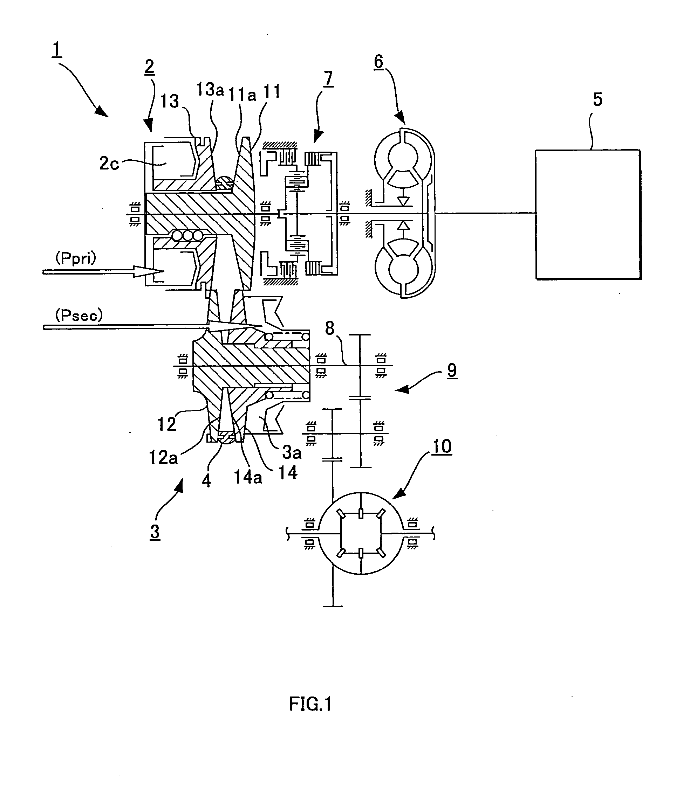

An embodiment of this invention will be described in detail below on the basis of the drawings. FIG. 1 shows an outline of a V-belt-type continuously variable transmission (to be referred to hereafter as a continuously variable transmission) 1 in which a primary pulley 2 and a secondary pulley 3 are arranged such that respective V-grooves thereof are aligned, and a V-belt (belt) 4 is looped around the V-grooves of the pulleys 2, 3. An engine 5 is disposed coaxially with the primary pulley 2, and a torque converter 6 having a lockup clutch and a forward/reverse switching mechanism 7 are provided between the engine 5 and the primary pulley 2 in sequence from the engine 5 side.

The rotation of the primary pulley 2 is transmitted to the secondary pulley 3 via the V-belt 4, whereupon the rotation of the secondary pulley 3 is transmitted to a vehicle wheel via an output shaft 8, a gear set 9 and a differential gear device 10.

To enable modification of a rotation transmission ratio (speed ratio) between the primary pulley 2 and secondary pulley 3 during the power transmission described above, the V-grooves of the primary pulley 2 and secondary pulley 3 are formed by fixed sheaves 11, 12 and movable sheaves 13, 14. The movable sheaves 13, 14 are capable of axial direction displacement relative to the fixed sheaves 11, 12, and by supplying a primary pulley pressure (Ppri) and a secondary pressure (Psec) created using a line pressure as a source pressure to a primary pulley chamber 2a and a secondary pulley chamber 3a, the movable sheaves 13, 14 are biased toward the fixed sheaves 11, 12. As a result, the V-belt 4 is frictionally engaged to the respective sheaves such that power transmission is performed between the primary pulley 2 and secondary pulley 3.

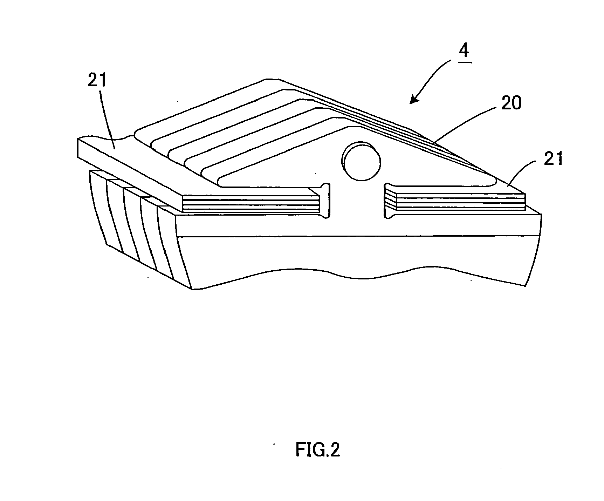

As shown in FIG. 2, the V-belt 4 is constituted by elements 20 and metallic belts 21. The V-belt 4 is formed by laminating together a plurality of the elements 20 and sandwiching the laminated elements 20 with the substantially circular metallic belts 21.

Sheave surfaces 11a to 14a of the fixed sheaves 11, 12 and movable sheaves 13, 14 contact the element 20 of the V-belt 4 via an oil film (to be referred to hereafter as contact between the sheave surface and the element (V-belt)).

During a ratio change, the V-groove width of the two pulleys 2, 3 is varied according to a differential pressure between the primary pulley pressure (Ppri) and secondary pulley pressure (Psec). By varying a looping arc radius of the V-belt 4 relative to the pulleys 2, 3 continuously, the pulley ratio (speed ratio) is modified, and thus a ratio change is performed.

An example of this invention will be described below, but this invention is not limited by the following example.

In this example, sheave surfaces are finished using ELID cutting, hard turning, polishing and mirror finishing, whereupon the finished sheave surfaces are evaluated according to surface roughness (Ra), initial wear height (Rpk), and oil keeping depth (Rvk). It should be noted that two types of mirror finishing using different polishing grains are employed, and these two types are referred to respectively as mirror finishing A and mirror finishing B.

(Method of measuring surface roughness (Ra), initial wear height (Rpk), and oil keeping depth (Rvk))

The surface roughness (Ra) is an arithmetic mean roughness defined by JIS (Japanese Industrial Standards) B 0601: 2001. The arithmetic mean roughness is a value obtained by extracting a reference length (L) from a roughness curve in an average line direction thereof, and then adding an absolute value of a deviation from an average line of the extracted part to a measurement curve, and averaging the adding value. In this example, measurement is performed in a diametrical direction in which the diameter of the sheave surface increases.

The initial wear height (Rpk) and the oil keeping depth (Rvk) are defined by JIS B 0671-2: 2002. First, the initial wear height (Rpk) will be described in detail.

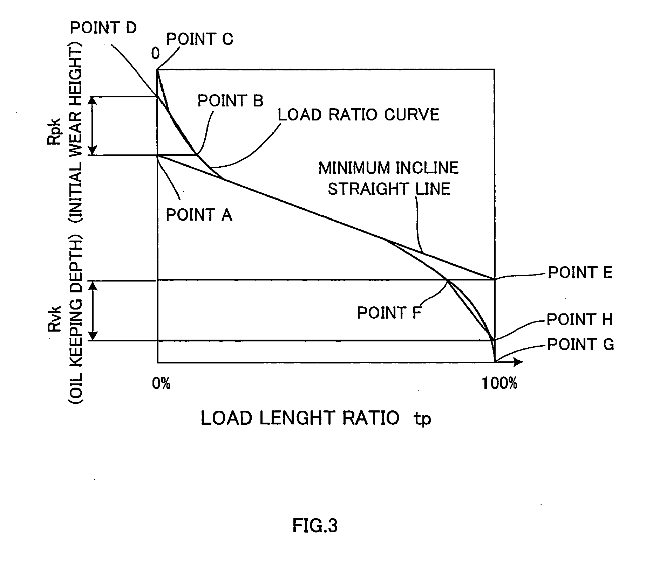

As shown in FIG. 3, when a load ratio curve is drawn in relation to a certain roughness curve with a load length ratio (tp) on the abscissa, a minimum incline straight line at which a difference with the load length ratio (tp) reaches 40% is extracted, and a point at which the straight line intersects with a load length ratio (tp) 0% is set as a point (A). A location in which a line extending parallel to the abscissa from the point (A) intersects with the load ratio curve, or in other words the load ratio curve having the same height as the point (A) on the certain roughness curve, is set as a point (B), and the load ratio curve on which the load length ratio (tp) reaches 0% is set as a point (C). A point at which the load length ratio (tp) reaches 0%, or more specifically a point at which a surface area of a triangle formed by this point and the points (A) and (B) becomes identical to a surface area surrounded by a line segment (BC), which forms a part of the load ratio curve, a line segment (AB), and a line segment (AC) is set as a point (D). A distance between the point (D) and the point (A) determined in this manner is the initial wear height (Rpk).

Next, the oil keeping depth (Rvk) will be described in detail.

As shown in FIG. 3, when a load ratio curve is drawn in relation to a certain roughness curve with the load length ratio (tp) on the abscissa, a minimum incline straight line at which a difference with the load length ratio (tp) reaches 40% is extracted, and a point at which the straight line intersects with a load length ratio (tp) 100% is set as a point (E). A location in which a line extending parallel to the abscissa from the point (E) intersects with the load ratio curve is set as a point (F), and the load ratio curve on which the load length ratio (tp) reaches 100% is set as a point (G). A point at which the load length ratio (tp) reaches 100%, or more specifically a point at which a surface area of a triangle formed by this point and the points (E) and (F) becomes identical to a surface area surrounded by a line segment (FG), which forms a part of the load ratio curve, a line segment (EF), and a line segment (EG) is set as a point (H). A distance between the point (H) and the point (E) determined in this manner is the oil keeping depth (Rvk).

In this example, the surface roughness (Ra), initial wear height (Rpk), and oil keeping depth (Rvk) are measured according to the following conditions.

Measuring device: Taylor-Hobson Form Talysurf S5
Measurement length: 5mm
Evaluation length: 4mm
Cutoff: 0.8mm
Filter: Gaussian
Bandwidth: 100:1
Tip end radius of stylus: $2\mu$m

(Evaluation test method of frictional coefficient ($\mu$))

As a method for performing an evaluation test on the frictional coefficient ($\mu$), a load of 392N per element is applied to a sheave surface polished according to the methods described above in lubricating oil having an oil temperature of 110°C, and the element is brought into contact with the sheave surface. The element is then raised and lowered within a range of 0 to 0.8m/s, and the frictional coefficient ($\mu$) during continuous sliding is measured. These conditions correspond to conditions at a Low speed ratio when the continuously variable transmission is actually installed in a vehicle. In this example, the value of the frictional coefficient ($\mu$) when the element speed measured according to the above conditions is 0.7m/s is used.

(Relationship between surface roughness (Ra) and frictional coefficient ($\mu$))

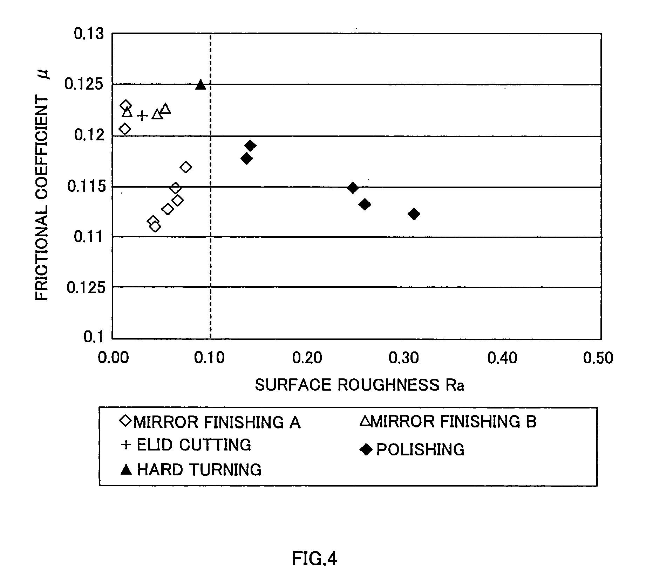

FIG. 4 shows a relationship between the surface roughness (Ra) of the sheave surface and the frictional coefficient ($\mu$).

The surface roughness (Ra) differs according to the sheave surface finishing method, and when the surface roughness (Ra) decreases, the frictional coefficient ($\mu$) becomes comparatively large. However, in a region where the surface roughness (Ra) is 0.1 or less, the frictional coefficient ($\mu$) sometimes decreases even though the surface roughness (Ra) is small.

The frictional coefficient ($\mu$) is preferably large to ensure that element torque is transmitted from the sheave surface. When the surface roughness (Ra) decreases, the contact area in which the sheave surface contacts the element via the reaction film increases, leading to an increase in the frictional coefficient ($\mu$), and as a result, the torque transmission function usually increases. According to FIG. 4, however, the frictional coefficient ($\mu$) sometimes decreases even when the surface roughness (Ra) is small, making it impossible to obtain the desired frictional force.

(Relationship between initial wear height (Rpk) and element wear)

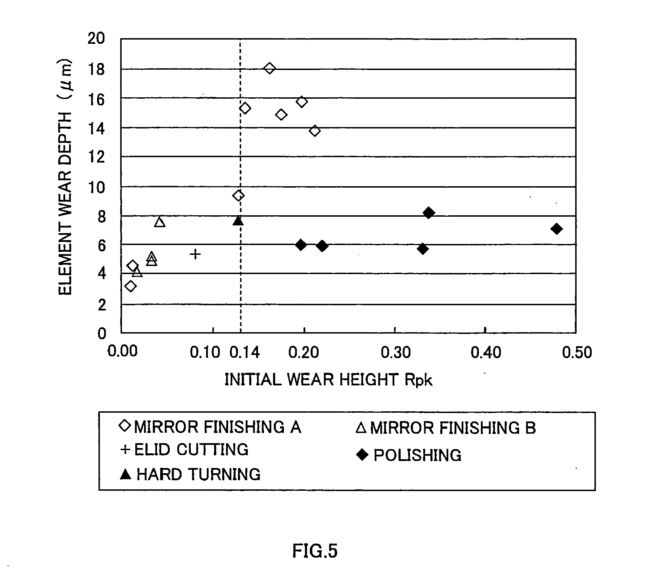

FIG. 5 shows a relationship between the initial wear height (Rpk) and element wear. Element wear is an average value of the amount of wear on the element, which is obtained in the evaluation test.

When the initial wear height (Rpk) is high, element wear increases. The reason for this is that local surface pressure between a projecting part of the sheave surface and the element increases, causing the reaction film to become worn such that the projecting part of the sheave surface and the element come into direct contact. As a result, the element deteriorates. In this embodiment, it was learned that when the initial wear height (Rpk) is 0.14 or less, element wear decreases.

(Relationship between oil keeping depth (Rvk) and sheave surface wear)

As described in the Means for solving the Problem, the reaction film is not as hard as metal, and therefore generation and depletion thereof occur repeatedly in a sliding environment. Therefore, to promote generation of the reaction film, lubricating oil must be supplied constantly from the vicinity of a minute irregular contact portion.

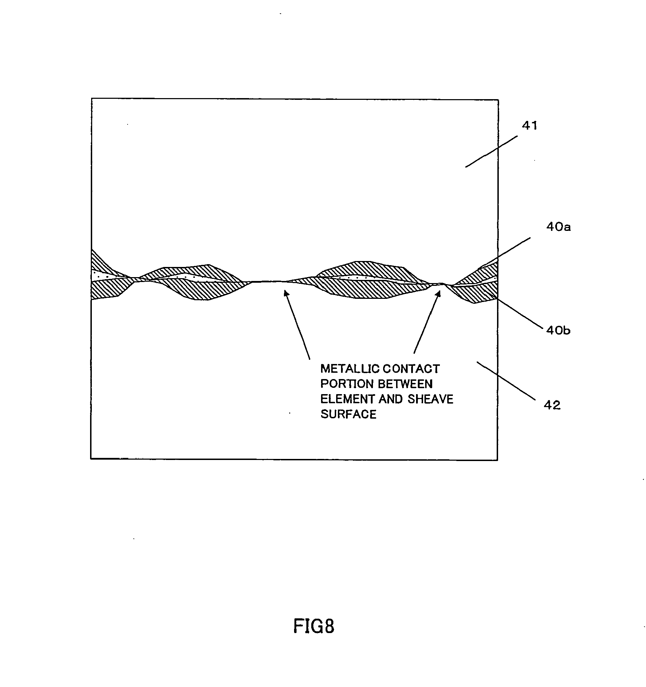

In FIG. 8, which is a sectional pattern diagram of the contact portion, parts that are capable of holding lubricating oil on the contact surface are substantially non-existent, and therefore the lubricating oil cannot be supplied easily. Hence, generation of the reaction films 40a, 40b are suppressed while depletion of the reaction film progresses such that eventually, the sheave surface 42 serving as the base material comes into metallic contact with the elements 41, causing damage such as adhesive wear.

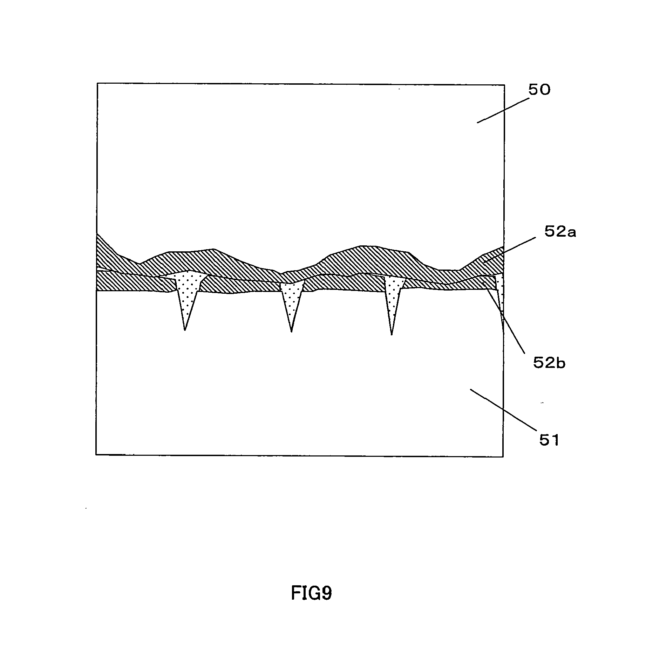

By providing a groove for holding lubricating oil on the contact surface between the sheave surface 51 which comprises the oil keeping depth (Rvk) having predetermined depth and the initial wear height (Rpk) having predetermined height, and the elements 50, as shown in the sectional pattern diagram of FIG. 9, lubricating oil can be supplied to the minute irregular contact portion, and as a result, generation of the reaction films 52a, 52b can be promoted.

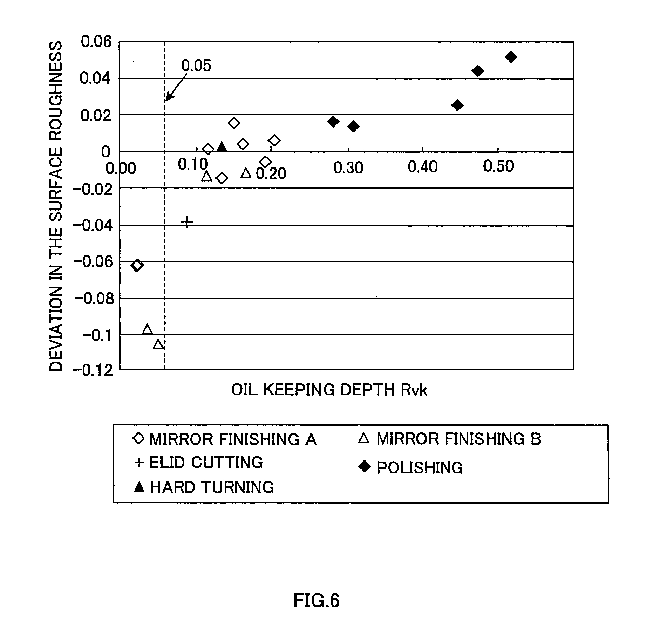

FIG. 6 shows a relationship between the oil keeping depth (Rvk) and a deviation in the surface roughness of the sheave surface, which is obtained by subtracting a post-test surface roughness (Ra) from the surface roughness (Ra).

When the oil keeping depth (Rvk) is small, or in other words when few or substantially no low locations serving as groove portions exist on the sheave surface, the surface roughness deviation increases in a negative direction. When few groove portions exist on the sheave surface, insufficient lubricating oil is supplied to the contact portion, and as a result, generation of the reaction film is suppressed while depletion thereof advances. Hence, the sheave surface and the element come into metallic contact, causing the sheave surface to become worn. In this example, it was learned that when the oil keeping depth (Rvk) is 0.05$\mu$m or more, the surface roughness deviation is comparatively small.

It is evident from the above that when the initial wear height (Rpk) is large even if the surface roughness (Ra) is small, the reaction film becomes worn, leading to an increase in element wear, and as a result, the frictional coefficient ($\mu$) between the sheave surface and the element decreases. Further, when the oil keeping depth (Rvk) is small even if the surface roughness (Ra) is small, insufficient lubricating oil is supplied to the contact portion, leading to metallic contact which causes the sheave surface to become worn, and as the wear progresses, a ratio change function for adjusting the pulley ratio smoothly may be impaired. Hence, by reducing the initial wear height (Rpk) of the sheave surface and making the oil keeping depth (Rvk) comparatively large, the frictional coefficient ($\mu$) can be increased without impairing the performance of the ratio change function, and the frictional force between the sheave surface and the V-belt can be increased.

In a continuously variable transmission in particular, when the speed ratio is on the Low side ratio, a comparatively large sandwiching force is required of the primary pulley to suppress slippage in the V-belt. In other words, the frictional force between the sheave surface and the V-belt is particularly important. Hence, by providing at least the sheave surface of the primary pulley with the initial wear height (Rpk) and oil keeping depth (Rvk) described above, torque transmission between the sheave surface and the V-belt can be performed efficiently, without impairing the performance of the ratio change function, and as a result, an improvement in fuel economy can be achieved.

The effects of this embodiment of the invention will now be described.

By providing the sheave surfaces of the primary pulley and secondary pulley of the continuously variable transmission, in particular the sheave surface of the primary pulley, with an initial wear height (Rpk) at which the reaction film between the sheave surface and the element does not become worn and a sufficient oil keeping depth (Rvk) for promoting reaction film generation such that metallic contact does not occur between the sheave surface and the element, deterioration of the sheave surface or the element can be suppressed, and torque transmission between the sheave surface and the element can be performed efficiently without impairing the performance of the ratio change function. Thus, the line pressure that serves as the source pressure of the primary pulley pressure (Ppri) and secondary pulley pressure (Psec) can be reduced, enabling an improvement in fuel economy.

By setting the initial wear height (Rpk) at $0.14\mu$m or less, deterioration of the element can be suppressed, enabling an increase in the frictional coefficient ($\mu$) and a corresponding increase in the frictional force between the sheave surface and the V-belt. As a result, the line pressure that serves as the source pressure of the primary pulley pressure (Ppri) and secondary pulley pressure (Psec) can be reduced, enabling an improvement in fuel economy.

By setting the oil keeping depth (Rvk) at $0.05\mu$m or more, wear on the sheave surface can be suppressed, and as a result, torque transmission between the sheave surface and the V-belt can be performed efficiently, without impairing the performance of the ratio change function.

This application claims priority from Japanese Patent Application 2007-077456, filed March 23, 2007, which is incorporated herein by reference in its entirety.

**Claims**

1.   A continuously variable transmission (1) comprising:

   an input side primary pulley (2) having a variable groove width formed by an opposing sheaves (11, 13);
   an output side secondary pulley (3) having a variable groove width formed by an opposing sheaves (12, 14); and
   a belt (4) looped around the primary pulley (2) and the secondary pulley (3), in which a contact radius with sheave surfaces (11a, 12a, 13a ,14a, 51) of the sheaves (11, 12, 13, 14) vary in accordance with the groove width, wherein
   at least one of the sheave surfaces (11a, 12a, 13a, 14a, 51) is provided with an initial wear height (Rpk) at which a reaction film (52a, 52b) between the sheave surface (11a, 12a, 13a, 14a, 51) and the belt (4) does not become worn and a sufficient oil keeping depth (Rvk) to promote generation of the reaction film such that metallic contact does not occur between the sheave surface (11a, 12a, 13a, 14a, 51) and the belt (4).

2.   The continuously variable transmission (1) as defined in Claim 1, wherein the initial wear height (Rpk) is $0.14\mu$m or less.

3.   The continuously variable transmission (1) as defined in Claim 1, wherein the oil keeping depth (Rvk) is $0.05\mu$m or more.

4.   The continuously variable transmission (1) as defined in Claim 1, wherein the sheave surface (11a, 12a, 13a, 14a, 51) has a surface roughness of $0.1\mu$m or less.

5.   A manufacturing method for a continuously variable transmission (1) which has an input side primary pulley (2) having a variable groove width formed by an opposing sheaves (11,13), an output side secondary pulley (3) having a variable groove width formed by an opposing sheaves (12,14), and a belt (4) looped around the primary pulley (2) and the secondary pulley (3), in which a contact radius with sheave surfaces (11a, 12a, 13a, 14a, 51) of the sheaves (11, 12, 13, 14) vary in accordance with the groove width,
   the method comprising:

   finishing at least one of the sheave surfaces (11a, 12a, 13a, 14a, 51) on the basis of an initial wear height (Rpk) and an oil keeping depth (Rvk).

6. The manufacturing method for a continuously variable transmission (1) as defined in Claim 5, wherein the initial wear height (Rpk) is 0.14μm or less.

7. The manufacturing method for a continuously variable transmission (1) as defined in Claim 5, wherein the oil keeping depth (Rvk) is 0.05μm or more.

8. The manufacturing method for a continuously variable transmission (1) as defined in Claim 5, wherein the sheave surface (11a, 12a, 13a, 14a, 51) has a surface roughness of 0.1μm or less.

FIG.1

FIG.2

FIG.3

FIG.4

...

FIG.5

FIG.6

FIG.7

41

40a

40b

42

METALLIC CONTACT
PORTION BETWEEN
ELEMENT AND SHEAVE
SURFACE

FIG8

FIG9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005321090 A

- JP 2007077456 A